Europäisches Patentamt

European Patent Office

Office européen des brevets

(19)

(11) Numéro de publication : **0 299 861 B1**

(12) ## FASCICULE DE BREVET EUROPEEN

(45) Date de publication du fascicule du brevet :
**11.09.91 Bulletin 91/37**

(51) Int. Cl.⁵ : **B60R 22/38**

(21) Numéro de dépôt : **88401798.9**

(22) Date de dépôt : **08.07.88**

(54) Rétracteur de sangle de sécurité pour véhicule automobile pourvu de moyens anti-blocage de la sangle à l'enroulement.

(30) Priorité : **17.07.87 FR 8710155**

(43) Date de publication de la demande :
**18.01.89 Bulletin 89/03**

(45) Mention de la délivrance du brevet :
**11.09.91 Bulletin 91/37**

(84) Etats contractants désignés :
**DE ES GB IT SE**

(56) Documents cités :
**EP-A- 0 121 256**
**GB-A- 2 113 529**
**GB-A- 2 113 979**
**US-A- 4 300 733**

(73) Titulaire : **ECIA - EQUIPEMENTS ET COMPOSANTS POUR L'INDUSTRIE AUTOMOBILE**
**F-25400 Audincourt (Doubs) (FR)**

(72) Inventeur : **Piguet, Jean-Pierre**
**3 rue des Pâquerettes**
**F-25400 Audincourt (FR)**

(74) Mandataire : **Obolensky, Michel et al**
**c/o CABINET LAVOIX 2, place d'Estienne d'Orves**
**F-75441 Paris Cédex 09 (FR)**

EP 0 299 861 B1

## Description

La présente invention est relative aux rétracteurs de sangles de sécurité pour véhicules automobiles.

On connaît d'après le brevet FR-A-2525479, un rétracteur pour sangle de sécurité qui comporte un support en forme d'étrier, dans lequel est monté à rotation un mandrin sur lequel est enroulée la sangle.

A l'une de ses extrémités, l'axe du mandrin est sollicité par un ressort de rappel du type en spirale logé dans un premier capot fixé à l'aile correspondante du support en forme d'étrier.

A son autre extrémité, l'axe du mandrin est associé à un mécanisme de blocage en rotation par inertie logé dans un second capot fixé à l'aile dudit support opposée à l'aile portant le ressort de rappel.

Le mécanisme de blocage en rotation du mandrin est actionné par deux dispositifs de détection différents et indépendants l'un de l'autre.

Un premier dispositif de détection sensible à la décélération véhicule sur lequel est monté l'enrouleur comporte par exemple une bille logée dans un siège en forme de cuvette et assurant par ses déplacements dans celle-ci l'actionnement d'un levier de commande d'un mécanisme de blocage en rotation du mandrin portant la sangle.

Un second dispositif de détection sensible à une tension brusque exercée sur la sangle comporte une masse d'inertie liée en rotation au mandrin, entraînée en rotation par le déroulement de la sangle et qui agit elle aussi sur un levier de commande du mécanisme de blocage du mandrin lorsqu'une tension brusque exercée sur la sangle provoque un décalage en rotation de la masse d'inertie par rapport au mandrin.

Les rétracteurs du type précité fonctionnent parfaitement dans le sens du déroulement de la sangle.

En revanche, lors de l'enroulement de la sangle, par exemple en raison du coincement de son extrémité libre portant la boucle soit dans un obstacle qu'elle rencontre dans le véhicule, soit en fin de course d'enroulement contre le renvoi de sangle habituellement fixé sur la carrosserie du véhicule, l'arrêt brusque de l'enroulement de la sangle provoque l'actionnement du levier de commande du mécanisme de blocage en rotation du mandrin par la masse d'inertie qui, en raison de son inertie, poursuit son mouvement de rotation alors que le mandrin est arrêté.

La sangle restant sous tension en raison du coincement de son extrémité libre, le levier de commande maintient à l'état actif le mécanisme de blocage en rotation du mandrin de sorte que le rétracteur se trouve alors bloqué dans le sens de l'enroulement comme dans le sens du déroulement.

Son déblocage nécessite un relâchement de la tension exercée sur la sangle qui est relativement difficile à obtenir par exemple dans le cas où l'extrémité libre de la sangle portant la boucle est en butée contre le renvoi de sangle solidaire de la carrosserie.

Le EP-A-0121256 correspondant au préambule de la revendication 1 décrit un rétracteur de sangle de sécurité avec un mécanisme de relâchement de blocage comportant des moyens permettant de dérouler légèrement la sangle pour relâcher les divers moyens de verrouillage du rétracteur.

L'invention vise à perfectionner la technique des rétracteurs de la technique antérieure en créant un rétracteur dont les blocages intempestifs lors de l'enroulement de la sangle soient évités.

Elle a donc pour objet un rétracteur de sangle de sécurité pour véhicule automobile comprenant un support, un mandrin monté à rotation dans ledit support, une sangle enroulée sur ledit mandrin, un organe élastique de rappel du mandrin dans le sens de l'enroulement de la sangle, un mécanisme de blocage en rotation du mandrin sous la commande de moyens détecteurs sensibles aux décélérations brusques du véhicule et à un accroissement brusque de la tension de la sangle, ledit mécanisme de blocage comprenant montée sur l'axe du mandrin une couronne de guidage d'au moins un organe de blocage en rotation du mandrin destiné à coopérer sous l'action d'une came entraînée par l'axe du mandrin avec des creux ménagés dans une couronne de blocage entourant l'axe du mandrin, fixée au support, les moyens détecteurs comprenant une pièce d'inertie montée libre sur l'axe du mandrin et maintenue dans ladite couronne de guidage, un organe de blocage en rotation de la couronne de guidage actionné par ladite pièce d'inertie et coopérant avec une pièce annulaire montée sur la couronne de blocage fixée au support et concentrique à celle-ci, ladite pièce annulaire étant pourvue de saillies réparties à intervalles réguliers à sa périphérie interne, et destinées à venir en prise avec ledit organe de blocage en rotation de la couronne de guidage, le rétracteur comportant en outre des moyens inhibiteur pour empêcher le blocage du mandrin dans le sens de l'enroulement de la sangle sous l'action de la pièce d'inertie lors d'une immobilisation accidentelle de ladite sangle et étant caractérisé en ce que lesdits moyens inhibiteur comprennent ladite pièce annulaire montée déplaçable angulairement par rapport à la couronne de blocage fixée au support, d'un angle ($\alpha$) au moins égal à l'intervalle angulaire ($\alpha'$) entre deux saillies voisines de ladite pièce annulaire et par des moyens élastiques de rappel de ladite pièce annulaire dans le sens de l'enroulement de la sangle.

L'invention sera mieux comprise à l'aide de la description qui va suivre, donnée uniquement à titre d'exemple et faite en se référant aux dessins annexés, sur lesquels :

— la Fig.1 est une vue en perspective avec arrachement partiel d'un rétracteur de sangle suivant l'invention ;

— la Fig.2 est une vue en perspective montrant plus clairement les moyens suivant l'invention destinés à empêcher le blocage du rétracteur dans le sens de l'enroulement de la sangle ;

— la Fig.3 est une coupe suivant la ligne 3-3 de la Fig.2 ;

— la Fig.4 est une vue selon la coupe 4-4 de la Fig.2 ;

— la Fig.5 est une vue en perspective montrant une variante des moyens destinés à empêcher le blocage du rétracteur suivant l'invention ;

— la Fig.6 est une coupe suivant la ligne 6-6 de la Fig.5 ; et

— la Fig.7 est une coupe suivant la ligne 7-7 de la Fig.5.

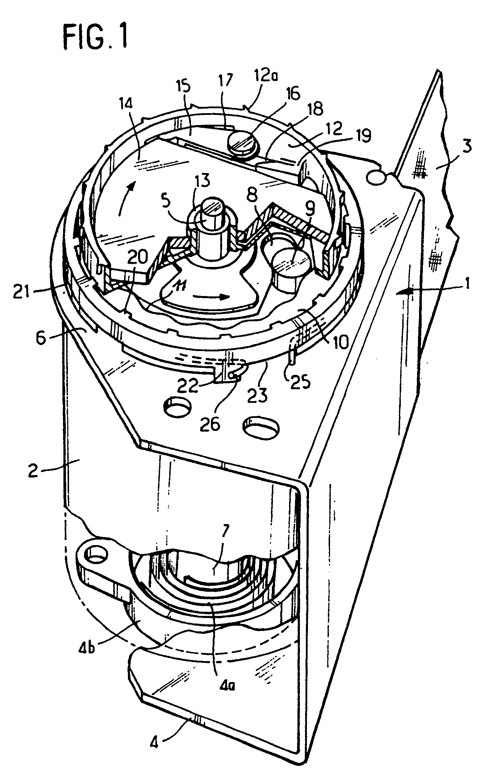

Le rétracteur de sangle représenté à la Fig.1 comporte un support 1 en forme d'étrier dans lequel est monté à rotation un mandrin 2 sur lequel est enroulée une sangle 3.

A l'une de ses extrémités, l'axe du mandrin 2 traverse l'aile 4 du support 1 et il est sollicité par un ressort de rappel 4a du type en spirale logé dans un premier capot 4b fixé à l'aile 4 du support 1.

A son autre extrémité, l'axe 5 du mandrin 2 s'étend au-delà de la seconde aile 6 du support 1 en étrier et porte une came 7 calée en rotation sur l'axe 5 et pourvue de logements 8 pour des galets 9 de blocage en rotation du mandrin 2, lesdits galets coopérant avec une couronne de blocage 10 fixée à l'aile 6 du support 1 de façon coaxiale au mandrin 2 et pourvue d'évidements 11 régulièrement répartis à sa périphérie, destinés à recevoir les galets 9 sous l'action de la came 7 pour assurer le blocage en rotation du mandrin 2.

Sur l'axe 5 est en outre montée à rotation une couronne 12 de guidage des galets 9 entraînée en rotation par la came 7 par l'intermédiaire d'un ressort en épingle (non représenté) qui donne à la couronne 12 un léger degré de liberté en rotation par rapport à la came 7 autour de l'axe 5.

La couronne de guidage de galets 12 comporte un moyeu 13 sur lequel est montée libre en rotation une pièce d'inertie 14 en forme de plaque, destinée à entraîner d'un cliquet 15 articulé en rotation sur la couronne de guidage de galets 12 au moyen d'un axe 16 et disposé en regard d'une lumière 17 ménagée dans la paroi latérale de la couronne 12 de guidage de galets. Le cliquet 15 est sollicité en position escamotée dans la couronne de guidage 12 par un ressort à lame 18 encastré dans une saillie 19 venue de matière avec la couronne de guidage 12. Le cliquet 15 coopère avec une série de saillies ou d'ergots 20 régulièrement répartis à la périphérie interne d'une pièce annulaire 21 portée par la couronne de blocage 10 fixée au support 1.

La couronne 12 de guidage de galets comporte en outre une série de dents 12a régulièrement réparties sur la périphérie externe de sa paroi latérale, lesdites dents 12a étant destinées à coopérer avec un levier de blocage d'un dispositif à bille ou à pendule (non représenté) sensible aux décélérations brusques du véhicule.

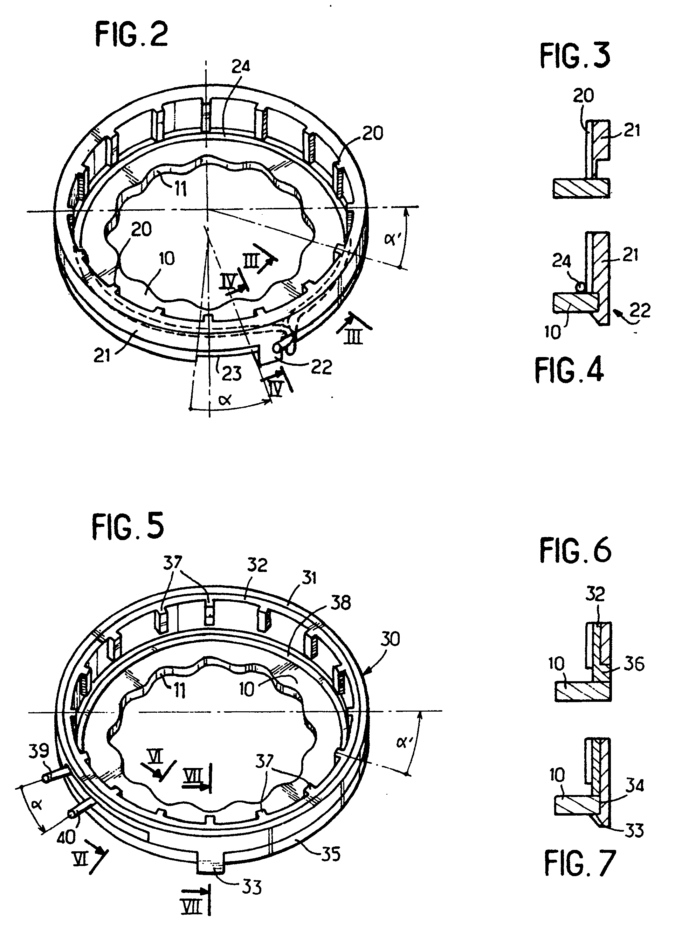

Ainsi qu'on peut mieux le voir aux Fig.2 à 4, la pièce annulaire 21 est reliée à la couronne de blocage 10 par des doigts d'accrochage 22 disposés dans des dégagements 23 ménagés dans la couronne de blocage 10, ce qui permet d'assurer à la pièce annulaire 21 un déplacement angulaire α par rapport à la couronne de blocage 10.

La pièce annulaire 21 est rappelée dans le sens de l'enroulement de la sangle par un ressort en forme de jonc 24 disposé à l'intérieur de ladite pièce annulaire. Le ressort 24 comporte une première extrémité 25 accrochée à un bord d'un dégagement 23 de la couronne de blocage 10 et par une seconde extrémité 26 fixée sur un doigt d'accrochage 22 de la pièce annulaire 21.

Bien que dans le présent mode de réalisation, on utilise un ressort 24 de rappel de la pièce annulaire 21 en forme de jonc, il est également possible d'employer des ressorts d'une autre nature, par exemple un ou plusieurs ressorts hélicoïdaux.

Ainsi qu'on peut le voir à la Fig.2, l'angle α de déplacement relatif de la pièce annulaire 21 par rapport à la couronne de blocage 10 a été choisi égal à l'intervalle angulaire α' entre deux ergots 20 successifs de la pièce annulaire 21.

Le rétracteur qui vient d'être décrit fonctionne de la manière suivante.

On suppose que la sangle 3 se trouve normalement accrochée autour d'un utilisateur.

Dans le cas d'une décélération brusque, la traction exercée sur la sangle 3 dans le sens de la flèche D de la Fig.1, tend à dérouler davantage la sangle 3. Cette traction brusque provoque un décalage d'entraînement en rotation entre la couronne 12 de guidage de galets et la masse d'inertie 14, de sorte que celle-ci déplace le cliquet 15 autour de son axe d'articulation 16 pour le faire sortir par la lumière 17 hors de la couronne de guidage de galets 12 et le faire venir en prise avec l'un des ergots 20 de la pièce annulaire 21.

Celle-ci est entraînée en rotation par le cliquet 15 jusqu'à ce que ses doigts d'accrochage 22 viennent en butée contre les bords correspondants des dégagements 23 de la couronne de blocage 10. Ce déplacement relatif de la couronne 12 de guidage de galets et de la couronne de blocage 10 provoque la tension du ressort de rappel 24.

La couronne de guidage de galets 12 étant alors immobilisée, la traction qui est toujours exercée sur la sangle 3 provoque l'entraînement du mandrin 2 et par conséquent de la came 7 qui applique les galets 9 dans des évidements 11 de la couronne de blocage 10. Le mandrin 2 est ainsi immobilisé en rotation.

Dès que la traction excessive sur la sangle 3 disparaît, le cliquet 15 est ramené par son ressort de rappel 18 à l'intérieur de la couronne 12 de guidage des galets, ce qui libère en rotation la couronne de guidage de galets 12 et provoque le retrait des galets 9 hors des évidements 11 de la couronne de blocage 10, de sorte que le mandrin 2 est à nouveau libre en rotation.

Simultanément au retrait du cliquet 15, il y a rappel de la pièce annulaire 21 par le ressort 24 dans le sens de l'enroulement de la sangle.

Si au cours d'un enroulement rapide de la sangle 3 par le rétracteur, l'extrémité libre de la sangle portant le boucle se coince brusquement dans un obstacle, par exemple par venue, en bout de course, contre un renvoi de sangle fixé à la carrosserie du véhicule, la différence d'inertie entre la couronne 12 de guidage de galets et la pièce d'inertie 14 provoquent un déplacement relatif en rotation de ces deux éléments, de sorte que la pièce d'inertie 14 actionne le cliquet 15 qui vient en prise avec l'un des ergots 20 de la pièce annulaire 21.

La venue en prise du cliquet 15 avec l'ergot précité provoque à nouveau un déplacement relatif de la pièce annulaire 21 par rapport à la couronne de blocage 10 à l'encontre de l'action du ressort de rappel 24. Ce déplacement de la pièce annulaire 21 dans le sens du déroulement de la sangle provoque un léger relâchement de la traction exercée sur celle-ci en raison du coincement de son extrémité libre, de sorte que le cliquet 15 peut se dégager de l'ergot 20 avec lequel il est en prise sous l'action de son ressort de rappel 18 et éviter ainsi le blocage du rétracteur.

Dès que le cliquet 15 est dégagé, la pièce annulaire 20 est à nouveau ramenée par le ressort de rappel 24 dans sa position de repos représentée à la Fig.1.

Sur les Fig. 5 à 7, on a représenté une variante des moyens anti-blocage selon l'invention.

Dans ce second mode de réalisation, il est prévu une pièce annulaire 30 réalisée en deux parties 31, 32 emboîtées l'une dans l'autre et déplaçables en rotation l'une par rapport à l'autre.

La partie extérieure 31 de la pièce annulaire 30 comporte, comme représenté notamment sur la Fig.7, des doigts d'accrochage 33 engagés dans des encoches 34 ménagées dans la couronne de blocage 10. Elle comporte en outre des encoches 35 de réception de saillies radiales 36 de la partie intérieure 32. Celle-ci est montée déplaçable angulairement par rapport à la partie extérieure fixe 31 et comporte comme la pièce annulaire 21 du mode de réalisation décrit en référence aux Fig.1 à 4, des ergots 37 régulièrement répartis à sa périphérie interne.

L'étendue angulaire des encoches 35 correspond à l'angle de déplacement $\alpha$ de la partie intérieure 32 par rapport à la partie extérieure 31 de la pièce annulaire 30.

Un ressort de rappel en forme de jonc 38 comporte une extrémité 39 accrochée à un bord d'une encoche 35 de la pièce extérieure et une extrémité 40 accrochée à une saillie radiale 36 de la partie intérieure 32.

En ce qui concerne le fonctionnement d'un rétracteur équipé de moyens anti-blocage du type représenté aux Fig.5 et 6, il est le même que celui du rétracteur représenté aux Fig.1 à 4 à l'exception près que seule la partie intérieure 32 de la pièce annulaire 30 est déplaçable en rotation alors que la partie extérieure 31 de celle-ci reste fixe.

Ce second mode de réalisation présente l'avantage vis à vis de celui décrit en référence aux Fig.1 à 4 de pouvoir être monté sans nécessiter de modification de la couronne de blocage 10 habituellement utilisée dans les rétracteurs classiques.

On voit donc que grâce à l'agencement qui vient d'être décrit, on obtient un rétracteur pour sangle de sécurité dans lequel les risques de blocage de rétracteur lors de l'enroulement de la sangle sont réduits au minimum.

## Revendications

1. Rétracteur de sangle de sécurité pour véhicule automobile comprenant un support (1), un mandrin (2) monté à rotation dans ledit support, une sangle (3) enroulée sur ledit mandrin, un organe élastique de rappel du mandrin dans le sens de l'enroulement de la sangle, un mécanisme de blocage en rotation du mandrin (2) sous la commande de moyens détecteurs sensibles aux décélérations brusques du véhicule et à un accroissement brusque de la tension de la sangle (3), ledit mécanisme de blocage comprenant montée sur l'axe du mandrin une couronne (12) de guidage d'au moins un organe (9) de blocage en rotation du mandrin (2) destiné à coopérer sous l'action d'une came (7) entraînée par l'axe (5) du mandrin (2) avec des creux (11) ménagés dans une couronne de blocage entourant l'axe du mandrin, fixée au support, les moyens détecteurs comprenant une pièce d'inertie (14) montée libre sur l'axe du mandrin (2) et maintenue dans ladite couronne de guidage (12), un organe (15) de blocage en rotation de la couronne de guidage (12) actionné par ladite pièce d'inertie (14) et coopérant avec une pièce annulaire (21 ; 30) montée sur la couronne (10) de blocage fixée au support et concentrique à celle-ci, ladite pièce annulaire (21 ; 30) étant pourvue de saillies (20 ; 37) réparties à intervalles réguliers à sa périphérie interne, et destinées à venir en prise avec ledit organe (15) de blocage en rotation de la couronne de guidage (12), le rétracteur comportant en outre des moyens (21, 22, 23, 24 ; 31, 32, 35, 36, 38) inhibiteurs pour empêcher le blocage du mandrin (2) dans le sens de l'enroulement de la sangle (3) sous l'action de la pièce d'inertie (14) lors d'une immobilisation accidentelle de ladite sangle (3) et étant caractérisé en ce que lesdits moyens (21, 22, 23, 24 ; 31, 32, 35, 36, 38) inhibiteurs, comprennent ladite pièce annulaire montée déplaçable angulairement par rapport à la couronne de blocage fixée au support (1), d'un angle (α) au moins égal à l'intervalle angulaire (α') entre deux saillies (21 ; 37) voisines de ladite pièce annulaire (20 ; 30) et par des moyens élastiques (24 ; 38) de rappel de ladite pièce annulaire (21 ; 30) dans le sens de l'enroulement de la sangle (3).

2. Rétracteur suivant l'une des revendications 1, caractérisé en ce que ladite pièce annulaire (21) comporte des doigts d'accrochage (22) engagés dans des dégagements (23) ménagés dans la couronne de blocage (10), lesdits moyens élastiques de rappel étant constitués par au moins un ressort (24) dont une extrémité (25) est en prise avec un bord d'un dégagement (23) de la couronne de blocage et dont l'autre extrémité (26) est en prise avec un doigt d'accrochage (22) de la pièce annulaire (21).

3. Rétracteur suivant la revendication 2, caractérisé en ce que ledit ressort (24) est un ressort en forme de jonc disposé à l'intérieur de ladite couronne de guidage (12).

4. Rétracteur suivant la revendication 2, caractérisé en ce que ledit ressort est un ressort hélicoïdal.

5. Rétracteur suivant l'une des revendications 1, caractérisé en ce que ladite pièce annulaire (30) comporte une partie extérieure solidaire de la couronne de blocage (10) et une partie intérieure (32) emmanchée dans la partie extérieure (31) et déplaçable en rotation par rapport à celle-ci, ladite partie intérieure (32) portant des saillies (37) régulièrement réparties à sa périphérie et destinées à coopérer avec ledit organe (15) de blocage en rotation de ladite couronne de guidage (12).

6. Rétracteur suivant la revendication 5, caractérisé en ce que ladite partie extérieure (31) de la pièce annulaire (30) est fixée à la couronne de blocage (9) par des ergots d'accrochage (33) engagés dans des encoches (34) ménagées dans ladite couronne de blocage et en ce que ladite partie intérieure (32) est montée à rotation dans la partie extérieure (31) par l'intermédiaire de saillies radiales (36) engagées dans des encoches (35) prévues dans la partie extérieure (31), et dont l'étendue angulaire (α) correspond à l'angle de déplacement (α') de la partie intérieure (32) par rapport à la partie extérieure (31).

7. Rétracteur suivant la revendication 6, caractérisé en ce que la partie intérieure (32) de la pièce annulaire est reliée à la partie extérieure de celle-ci par au moins un ressort (38) de rappel de la partie intérieure (32) dans le sens de l'enroulement de la sangle (3).

## Claims

1. Safety belt retractor for a motor vehicle comprising a support (1), a mandrel (2) mounted so as to rotate in the said support, a belt (3) wound onto said mandrel, an elastic member for returning the mandrel in the belt winding direction, a mechanism for locking the mandrel (2) in rotation under the control of detector means sensitive to sudden decelerations of the vehicle and a sudden rise in the tension of the belt (3), said locking mechanism comprises, mounted on the mandrel spindle, a ring (12) for guiding at least one member (9) for locking the mandrel (2) in rotation and which cooperates under the action of a cam (7) driven by the spindle (5) of the mandrel (2) with cavities (11) provided in a locking ring surrounding the mandrel spindle and fixed to the support, the detector means comprising an inertia member (14) mounted freely on the spindle of the mandrel (2) and maintained in said guide ring (12), a member (15) for locking the guide ring (12) in rotation and actuated by said inertia member (14) and which cooperates with an annular member (21, 30) mounted on the locking ring (10) fixed to the support and concentric to the latter, the annular member (21, 30) being provided with projections (20, 37) distributed at regular intervals over its inner periphery and which engage with the member (15) for locking the guide ring (12) in rotation, the retractor also comprising inhibiting means (21, 22, 23, 24 ; 31, 32, 35, 36, 38) for preventing the locking of the mandrel (2) in the winding direction of the belt (3) under the action of the inertia member (14) during an accidental immobilization of the said belt (3) and characterized in that said inhibiting means (21, 22, 23, 24 ; 31, 32, 35, 36, 38) comprise the said annular member mounted in angularly displaceable manner with respect to the locking ring fixed to the support (1) by an angle (α) at least equal to the angular gap (α') between two adjacent projections (21, 37) of said annular member (20, 30) and by elastic means (24, 38) for returning said annular member (21, 30) in the winding direction of the belt (3).

2. Retractor according to claim 1, characterized in that said annular member (21) comprises catches (22) engaged in clearances (23) in the locking ring (10), said elastic return means being constituted by at least one spring (24), whereof one end (25) is engaged with one edge of a clearance (23) of the locking ring and whereof the other end (26) engages with a catch (22) of the annular member (21).

3. Retractor according to claim 2, characterized in that the spring (24) is a retaining ring-like spring located within the said guide ring (12).

4. Retractor according to claim 2, characterized in that the said spring is a helical spring.

5. Retractor according to claim 1, characterized in that the annular member (30) comprises an outer part integral with locking ring (10) and an inner part (32) fitted into the outer part (31) and rotatable with respect thereto, said inner part (32) carrying the projections (37) regularly distributed on its periphery and serving to cooperate with the said member (15) for locking in rotation the guide ring (12).

6. Retractor according to claim 5, characterized in that the outer part (31) of the annular member (30) is fixed to the locking ring (9) by attachment pins (33) engaged in the notches (34) made in the said locking ring and in that the inner part (32) is mounted so as to rotate in the outer part (31) via radial projections (36) engaged in notches (35) provided in the outer part (31) and whereof the angular extension (α) corresponds to the displacement angle (α') of the inner part (32) with respect to the outer part (31).

7. Retractor according to claim 6, characterized in that the inner part (32) of the annular member is connected to the outer part thereof by at least one spring (38) for returning the inner part (32) in the winding direction of the belt (3).

**Patentansprüche**

1. Sicherheitsgurtaufroller für Kraftfahrzeuge, mit einem Träger (1), einem drehbar auf dem Träger angebrachten Wickelkörper (2), einem auf dem Wickelkörper aufgerollten Gurt (3), einem elastischen Rückholelement für den Wickelkörper im Sinne eines Aufrollens des Gurtes, einem Drehblockiermechanismus für den Wickelkörper (2) unter der Steuerung von auf abrupte Verzögerungen des Fahrzeugs und eine abrupte Zunahme der Spannung des Gurtes (3) empfindlichen Nachweismitteln, wobei der Blokkiermechanismus montiert auf der Achse des Wickelkörpers einen Kranz (12) zur Führung wenigstens eines Elements (9) zur Drehblockierung des Wickelkörpers (2) aufweist, welches für ein Zusammenwirken unter der Wirkung eines von der Achse (5) des Wickelkörpers (2) mitgenommenen Nockens (7) mit in einem die Achse des Wickelkörpers umgebenden und am Träger befestigten Blockierkranz ausgebildeten Vertiefungen (11) bestimmt sind, wobei die Nachweismittel ein frei auf der Achse des Wickelkörpers (2) angebrachtes und in dem Führungskranz (12) gehaltenes Trägheitsstück (14), ein Element (15) zur Drehblockierung des Führungskranzes (12), welches durch das Trägheitsstück (14) betätigt wird und mit einem Ringteil (21 ; 30) zusammenwirkt, welches auf dem am Träger befestigten Blockierkranz (10) angebracht und mit diesem konzentrisch ist, umfaßt, wobei das Ringteil (21 ; 30) mit Vorsprüngen (20 ; 37) versehen ist, welche in regelmäßigen Abständen über seinen Innenumfang verteilt und für ein Ineingriffkommen mit dem Element (15) zur Drehblockkierung des Führungskranzes (12) bestimmt sind, wobei der Aufroller ferner Hemmittel (21, 22, 23, 24 ; 31, 32, 35, 36, 38) zur Verhinderung eines Blockierens des Wickelkörpers (2) im Sinne eines Aufwickelns des Gurtes (3) unter der Wirkung des Trägheitsstückes (14) bei einem unbeabsichtigten Festhalten des Gurtes (3) aufweist und <u>dadurch gekennzeichnet</u> ist, daß die Hemmittel (21, 22, 23, 24 ; 31, 32, 35, 36, 38) das Ringteil bezüglich des am Träger (1) befestigten Blockierkranzes um einen Winkel (α) versetzbar aufweisen, der wenigstens gleich dem Winkelabstand (α') zwischen zwei benachbarten Vorsprüngen (20 ; 37) des Ringteils (21 ; 30) ist, und durch elastische Mittel (24 ; 38) zur Rückholung des Ringteiles (21 ; 30) im Sinne eines Aufrollens des Gurtes (3).

2. Aufroller nach Anspruch 1, dadurch gekennzeichnet, daß das Ringteil (21) Mitnehmerfinger (22) aufweist, die in im Blockierkranz (10) ausgebildete Aussparungen (23) eingeführt sind, wobei die elastischen Rückholmittel durch wenigsten eine Feder (24) gebildet sind, deren eines Ende (25) in Eingriff mit einem Rand einer Aussparung (23) des Blockierkranzes und deren anderes Ende (26) in Eingriff mit einem Mitnehmerfinger (22) des Ringteils (21) ist.

3. Aufroller nach Anspruch 2, dadurch gekennzeichnet, daß die Feder (24) eine im Inneren des Führungskranzes (12) angeordnete Feder in Form eines Sprengringes ist.

4. Aufroller nach Anspruch 2, dadurch gekennzeichnet, daß die Feder eine Schraubenfeder ist.

5. Aufroller nach Anspruch 1, dadurch gekennzechnet, daß das Ringteil (30) einen mit dem Blockierkranz (10) fest verbundenen äußeren Teil und einen inneren Teil (32) aufweist, welcher im äußeren Teil (31) angeschäftet und in bezug auf diesen drehversetzbar ist, wobei der äußere Teil (32) Vorsprünge (37) trägt, welche über seinen Umfang regelmäßig verteilt und für ein Zusammenwirken mit dem Element (15) zur Drehblokkierung des Führungskranzes (12) bestimmt sind.

6. Aufroller nach Anspruch 5, dadurch gekennzeichnet, daß der äußere Teil (31) des Ringteils (30) am Blockierkranz (10) mit Mitnehmernasen (33) angebracht ist, die in im Blockierkranz ausgebildete Einschnitte (34) eingreifen, und daß der innere Teil (32) im äußeren Teil (31) über radiale Vorsprünge (36) drehbar angebracht ist, die in Ausnehmungen (35) eingreifen, die im äußeren Teil (31) vorgesehen sind und deren Winkelerstreckung (α) dem Versetzungswinkel (α') des inneren Teils (32) bezüglich des äußeren Teils (31) entspricht.

7. Aufroller nach Anspruch 6, dadurch gekennzeichnet, daß der innere Teil (32) des Ringteils mit dem äußeren Teil desselben durch wenigstens eine Feder (38) zum Rückholen des inneren Teils (32) im Sinne eines Aufrollens des Gurtes (3) verbunden ist.

FIG.1

# FIG.2

# FIG.3

# FIG.4

# FIG.5

# FIG.6

# FIG.7